# EUROPEAN PATENT SPECIFICATION

(11) **EP 1 113 650 B1**
(45) Date of publication and mention of the grant of the patent: **07.06.2006**
(21) Application number: 00128510.5
(22) Date of filing: 27.12.2000
(51) Int. Cl.: H04M 3/30

(54) **Apparatus and method for telephone line and customer premises equipment testing**
Vorrichtung und Verfahren zur Prüfung einer Fernsprechleitung und eines Teilnehmeranschlussgerätes
Appareil et méthode de test d'une ligne téléphonique et de l'équipement local d'abonné

(30) Priority: 27.12.1999 US 173216 P; 10.08.2000 US 636574
(43) Date of publication of application: 04.07.2001
(73) Proprietor: Alcatel USA Sourcing, L.P., Plano, TX 75075 (US)
(72) Inventor: Bentley, Ronald, Santa Rosa, California 95405 (US)

(56) References cited:
- US-A- 4 041 255
- US-A- 4 529 847
- US-A- 5 357 556
- US-A- 5 425 075
- US-A- 5 802 169

## Description

This application claims benefit of prior filed copending Provisional Patent Application Serial No. 60/173,216, filed December 27, 1999.

### BACKGROUND OF THE INVENTION

The present invention is directed to telephone systems. The invention is especially directed to testing and characterizing a telephone circuit and associated customer premises equipment connected with the telephone circuit.

US 5,357,556 discloses a system and a method for testing equipment in a telephone network for remote maintenance and verification of subscriber loops.

Presently, in order to ascertain details relating to a problem on a telephone circuit or relating to customer equipment connected with the telephone circuit, one often must dispatch repair personnel with a repair truck to the locale of the problem. Many times the precise location of the problem is not known, and even more often the precise nature of the problem is not known. As a result, personnel and equipment assets are inefficiently employed in being dispatched to locate a problem and ascertain the precise nature of the problem when the location is learned. The repair personnel may not have the proper repair parts or tools for the problem that is finally identified, and must therefore return to a facility to obtain parts or tools. In some situations, different personnel must be dispatched to handle the problem and its repair. In other situations the problem is ascertained to be of a minor nature which could have been corrected by a simple replacement of equipment, a task that could be handled by lesser-trained persons than a repair person.

It would be useful if one could distinguish between line problems and customer equipment termination problems in a telephone circuit from the telephone system central office in the event of a poor service or a loss of service condition. It would be useful if one could, for example, determine from the telephone central office whether a telephone circuit is shorted, whether customer premises equipment is properly terminated with the telephone circuit, and whether the amount of line loss on the telephone circuit is within acceptable limits. Being able to make such determinations from a remote location would facilitate determining which repair assets to dispatch. One exemplary choice may be whether to dispatch a three-person repair crew and truck or dispatch a service representative with a replacement set-up box. Sending the correct resources for repairing a problem saves money.

### SUMMARY OF THE INVENTION

A telephone system comprising a central office, customer premises connected thereto by means of a telephone circuit, and an apparatus disposed remotely from the central office for remotely ascertaining at least one selected condition at the distal customer premises in the telephone circuit. The apparatus comprises a property altering device connected with the circuit. The central office comprises a generating device connected with the circuit; and a measuring device connected with the circuit. The property altering device is responsive to a parameter received from the generating device to alter at least one selected property associated with customer telephone equipment installed at the customer premises. The measuring device measures at least one of the at least one selected property to effect the ascertaining. The central office comprises means for imposing a sinusoidal signal on the telephone circuit before measuring the at least one of said at least one selected property, the sinusoidal signal being imposed at frequencies within a range of frequencies higher than those used for conventional voice transmission.

The method comprises the steps of: (a) altering at least one selected property associated with customer telephone equipment installed at said customer premises by altering a predetermined parameter on said telephone circuit at a central office remote from said customer premises; (b) changing configuration of connection of said telephone circuit, said changing being effected in response to said altering the predetermined parameter; (c) imposing a sinusoidal signal on the telephone circuit at frequencies within a range of frequencies higher than those used for conventional voice transmission; and (d) measuring said property at said central office.

The preferred embodiment of the invention provides for connecting a make-break device, such as a relay, in a telephone circuit at a customer locus distal from the telephone central office. The telephone circuit is normally connected to normally closed contacts of the relay. Imposing a differential voltage on the telephone circuit line sufficient to trip the relay operates to switch the relay to an open set of relay contacts. Such a circuit configuration effectively disconnects the customer equipment from the telephone circuit so long as the relay is configured to connect with the open set of contacts. Observing the reflected power measurable at the central office because of the imposed impedance-match conditions by the relay configuration enables one at the central office to ascertain certain details relating to the condition of the telephone circuit.

In the case of the preferred embodiment of the present invention, using a relay for implementation of the invention further provides electrical isolation for customer equipment while testing is underway with the relay connected to an open set of relay contacts.

If one conducts quantitative measurements of parameters relating to test conditions, and maintains a record of such measurements (e.g., in a database), one could create an objective basis for planning line maintenance in the telephone circuit. Such quantitative information could also be useful for predicting failures or failure rates.

It is, therefore, an object of the present invention to provide an apparatus and method for remotely ascertaining at least one selected condition in a telephone circuit up to and including a distal customer locus in said telephone circuit that facilitates characterization of the nature of a problem in the circuit from a remote location.

It is a further object of the present invention to provide an apparatus and method for remotely ascertaining at least one selected condition in a telephone circuit up to and including a distal customer locus in said telephone circuit that isolatingly protects customer equipment in the telephone circuit while testing the telephone circuit.

Still a further object of the present invention is to provide an apparatus and method for remotely ascertaining at least one selected condition in a telephone circuit up to and including a distal customer locus in said telephone circuit that can be employed to populate an objective record appropriate for predicting certain aspects of operation or maintenance of the telephone circuit.

Further objects and features of the present invention will be apparent from the following specification and claims when considered in connection with the accompanying drawings, in which like elements are labeled using like reference numerals in the various figures, illustrating the preferred embodiments of the invention.

### BRIEF DESCRIPTION OF THE DRAWINGS

Fig. 1 is a schematic block diagram illustrating a telephone system with the apparatus of the present invention installed.
Fig. 2 is an electrical schematic diagram of the preferred embodiment of the apparatus of the present invention.
Fig. 3 is a flow diagram illustrating the preferred embodiment of the method of the present invention.

### DETAILED DESCRIPTION OF THE PREFERRED EMBODIMENT

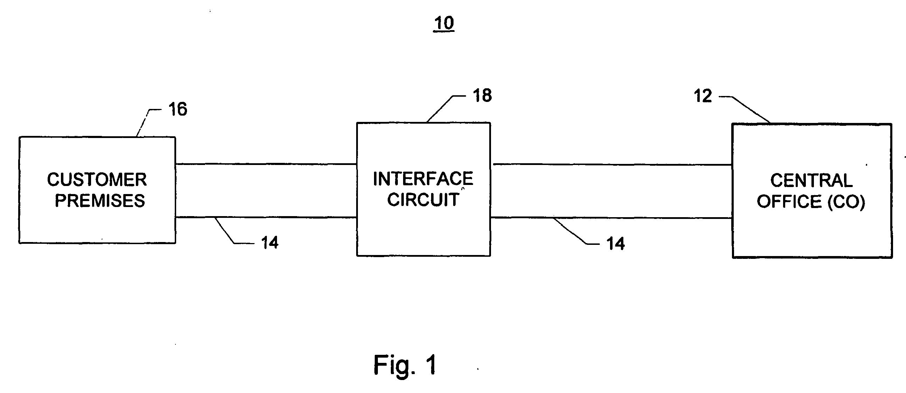

Fig. 1 is a schematic block diagram illustrating a telephone system with the apparatus of the present invention installed. In Fig. 1, a telephone system 10 includes a central office 12 connected by a telephone circuit 14 with a customer locus, or premises 16. The present invention is represented in Fig. 1 as an interface circuit 18 connected in telephone circuit 14 intermediate central office 12 and customer premises 16. In its preferred embodiment, the apparatus of the present invention is connected substantially at the interface between telephone circuit 14 and customer premises 16. In its most preferred embodiment, the apparatus of the present invention is incorporated as part of installed equipment at customer premises 16 (not shown in detail in Fig. 1).

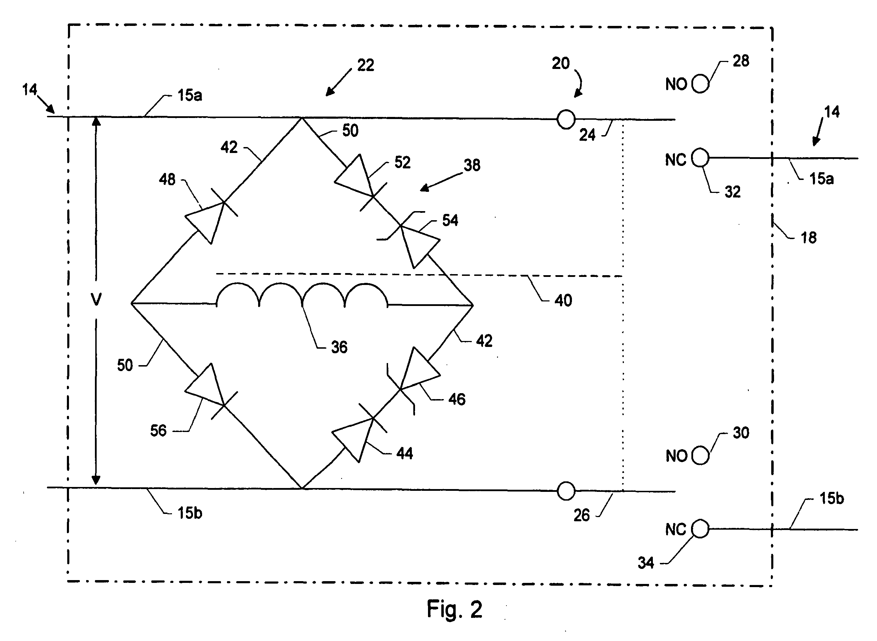

Fig. 2 is an electrical schematic diagram of the preferred embodiment of the apparatus of the present invention. In Fig. 2, interface circuit 18 is connected within telephone circuit 14. Telephone circuit includes twisted pair wires 15a, 15b. Interface circuit 18 comprises, in its preferred embodiment, a relay apparatus 20.

Relay apparatus 20 is preferably a double pole, double throw relay that includes a relay control circuit 22 and switching elements, or contacts 24, 26. Switching contacts 24, 26 are switchable between a first contact set 28, 30 and a second contact set 32, 34. First contact set 28, 30 is a normally open (NO) contact set; second contact set 32, 34 is a normally closed (NC) contact set.

Relay control circuit 22 includes an exciting coil 36, an associated bridge circuit 38 and an armature 40. Bridge circuit 38 responds to voltage potential across twisted pair wires 15a, 15b so that when voltage potential across twisted pair wires 15a, 15b exceeds a predetermined design threshold value, current flows through exciting coil 36, urging armature 40 to physically move. Armature 40 is connected with switching contacts 24, 26. Depending upon electrical and physical arrangements known to those skilled in the art, appropriate voltage potential levels of appropriate polarity will move switching contacts 24, 26 from normally closed contact set 32, 34 to normally open contact set 28, 30. Relay apparatus 20 is preferably biased in a manner urging switching contacts 24, 26 into contact with second contact set 32, 34 in the absence of an actuating force being applied to switching contacts 24, 26 by relay control circuit 22.

When switching contacts 24, 26 move from second contact set 32, 34 to first contact set 28, 30, central office 12 (Fig. 1) is no longer connected with customer equipment at customer premises 16. One result of such disconnection is an altered impedance at the junction between telephone circuit 14 and equipment installed at customer premises 16 (Fig. 1).

In particular, bridging circuit 38 includes a first circuit path 42 through exciting coil 36; first circuit path 42 includes a diode 44 connected in a reverse polarity orientation with a zener diode 46, connected with exciting coil 36, and connected with a diode 48. Diode 48 is connected with the same polarity orientation as diode 44. Bridging circuit 38 also includes a second circuit path 50 through exciting coil 36; second circuit path 50 includes a diode 52 connected in a reverse polarity orientation with a zener diode 54, connected with exciting coil 36, and connected with a diode 56. Diode 56 is connected with the same polarity orientation as diode 52. In operation, when the differential voltage between wires 15a, 15b exceeds a predetermined value, such as 150 volts, one of zener diodes 46, 54 (depending upon the polarity of voltage differential between wires 15a, 15b) is subjected to sufficient reverse bias to operate in its avalanche mode. As a consequence, one of first circuit path 42 or second circuit path 50 will conduct current through exciting coil 36. Preferably, either of first circuit path 42 or second circuit path 50 conducting current through exciting coil 36 will move armature 40 to engage switching contacts 24, 26 with first contact set 28, 30. Relay apparatus 20 is preferably configured to bias switching contacts 24, 26 to contact second contact set 32, 34 absent movement of armature 40 in response to exciting coil 36. If the breakdown voltage of zener diodes 46, 54 is not exceeded, then zener diodes 46, 54 deny current flow through exciting coil 36, and relay apparatus 20 returns to its biased position in contact with second contact set 32, 34.

In the biased position of relay apparatus 20 with switching contacts 24, 26 in contact with second contact set 32, 34, telephone circuit 14 operates substantially as though interface circuit 18 were not present therein.

The altering of impedance at the junction between telephone circuit 14 and equipment installed at customer premises 16 causes consequences measurable by common electrical parameters. Under normal line conditions, with customer equipment at customer premises 16 either on-hook or off-hook, with ringing or without ringing, signals from central office 12 are connected with customer equipment at customer premises 16 through second contact set 32, 34 of relay apparatus 20. If, for example, differential voltage between wires 15a, 15b exceeds a predetermined value sufficient to conduct current through exciting coil 36, switching contacts 24, 26 will be moved to contact first contact set 28, 30.

If telephone circuit 14 is perfectly terminated with customer equipment at customer premises 16 through a matched lossy line of real characteristic impedance with a matched source, then no power will be reflected back to central office 12 through telephone circuit 14.

If telephone circuit 14 is imperfectly terminated with customer equipment at customer premises 16 through a matched lossy line of real characteristic impedance with a matched source, then power will be reflected back to central office 12 through telephone circuit 14 in the amount of incident power (i.e., transmitted power), less twice the line loss minus the return loss.

If telephone circuit 14 is terminated with customer equipment at customer premises 16 with an open circuit through a matched lossy line of real characteristic impedance with a matched source, then power will be reflected back to central office 12 through telephone circuit 14 in the amount of incident power (i.e., transmitted power), less twice the line loss.

Thus, by including an inexpensive apparatus according to the present invention at the locus of customer premises 16, one can operate a telephone circuit such as telephone circuit 14 remotely from central office 12 to ascertain important characteristics occurring in the vicinity of customer premises 16 before dispatching any repair personnel or other assets. For example, a central office 12 may impose a high voltage upon a telephone circuit 14 sufficient to cause relay control circuit 22 to conduct current through exciting coil 36 to actuate relay apparatus 20, thereby effectively disconnecting customer premises 16 from telephone circuit 14. Preferably, the apparatus of the present invention is incorporated as an input interface circuit in customer equipment, so actuating relay apparatus 20 by raising voltage on telephone circuit 14 results in disconnecting connected customer equipment substantially at customer premises 16. By observing the amount of power reflected back to central office 12 through telephone circuit 14 when relay apparatus 20 is actuated and customer equipment at customer premises 16 are disconnected from telephone circuit 14, it can be determined whether there is proper termination of the affected equipment, whether there is a short in telephone circuit 14, or whether an open line condition exists.

Further, if a sinusoidal signal is imposed on telephone circuit 14 by central office 12 at frequencies appropriate, for example, for operating an Asynchronous Digital Subscriber Line (ADSL) phone circuit, then actuation of relay apparatus 20 provides a measurement of line loss at ADSL frequencies. If the same ADSL frequency sinusoidal frequency continues being sent when relay apparatus 20 is released to return to its biased position with switching contacts 24, 26 in contact with second contact set 32, 34, central office 12 should observe a decrease in signal magnitude on the order of about 15 dB if telephone system 14 is operating properly at ADSL frequencies. This capability to measure line quality as a function of frequency is particularly attactive to telephone system operators. A line in a degraded condition may be accceptable for ordinary frequency (e.g., voice transmission frequencies) operation. However, the line performance may degrade precipitously to an unacceptably low level at higher frequencies, such as frequencies employed in ADSL applications.

Other actuating devices for disconnecting telephone circuit 14 from customer equipment at customer premises 16 may be employed with similar beneficial results. Such alternate actuating devices may be employed with telephone circuits employing transmission technologies other than twisted pair technology. Such alternate actuating devices may include, for example, operational amplifiers and any of a variety of sensors of various parameters known to those skilled in the art.

Relay apparatuses such as relay apparatus 20 (Fig. 2) are particularly desirable because such devices offer an additional advantage of providing protection to components disconnected by relay action. If, by way of example, a high voltage source other than an intended signal imposed upon telephone circuit 14 at central office 12 may establish a high differential voltage across wires 15a, 15b. In the event of such a spurious high voltage condition, the preferred embodiment of the present invention, employing relay apparatus 20, isolates customer equipment at customer premises 16. Such a relay-protected circuit design would likely not protect customer equipment at customer premises 16 from very high speed transients, yet even protection at slower speeds can serve to simplify design of customer equipment. The size, and hence the cost, of absorptive transient suppressor devices is largely determined by the amount of energy such devices must dissipate. A protection relay employed as described in connection with the preferred embodiment of the apparatus of the present invention could limit transmitted duress signals in telephone circuit 14 to a duration on the order of milliseconds. Such limiting of duration of a duress signal to customer equipment at customer premises 16 reduces the amount of energy that absorptive transient suppressors associated with customer equipment must dissipate, thus reducing their cost.

Another advantageous application of the preferred embodiment of the apparatus of the present invention employing relay apparatus 20 is in connection with the use of fuse devices for circuit and equipment protection. If an absorptive protection device can protect the equipment for a sufficiently long period to enable relay apparatus 20 to actuate and move switching contacts 24, 26 from second contact set 32, 34 to first contact set 28, 30, the blow characteristics for an associated fuse protecting the equipment may be selected to provide that the fuse will not blow under most circumstances. Avoiding blown fuses avoids the need for dispatching a repair team to the equipment location to replace the fuse. In such a protection arrangement, a blown fuse normally would require a service call to restore associated equipment to operation, even if actual damage to the equipment were minimized.

Thus it may be seen that the apparatus of the present invention provides a capability to remotely actuate a test configuration at a customer's premises remotely from a central office and to remotely distinguish between line problems and customer equipment problems. Being able to make such a distinction enables one to decide whether to dispatch repair personnel (typically a three-person crew and truck) or to simply send out a representative with a replacement set-top box (replacing customer equipment).

The preferred embodiment of the apparatus of the present invention employs a relay apparatus that provides added protection for customer equipment. The apparatus of the present invention also provides a capability to quantitatively measure line conditions as a function of frequency. Recording measurements made in connection with this embodiment of the apparatus of the present invention and keeping a history of such measurements (e.g., storing the recorded measurements in an on-line database) provides a capability to plan maintenance of telephone circuit 14, or provide a capability to predict failure rates for telephone circuit 14 or customer equipment at customer premises 16.

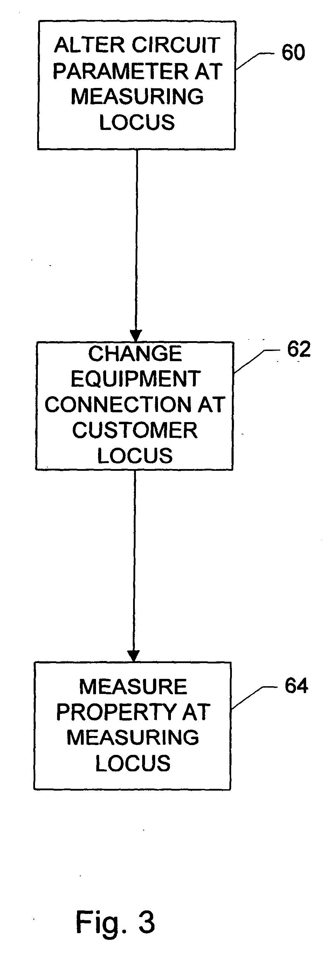

Fig. 3 is a flow diagram illustrating the preferred embodiment of the method of the present invention. In Fig. 3, the method begins by altering a circuit parameter of telephone circuit 14 (Figs. 1, 2) from a measuring locus, as indicated by a block 60. Preferably the measuring locus is distal from the customer locus, such as customer premises 16. Most preferably, the measuring locus is situated at central office 12 (Fig. 1). As described in connection with the apparatus of the present invention, the preferred parameter to alter is differential voltage across wires 15a, 15b in a twisted pair telephone circuit 14 (Fig. 2).

The method of the present invention continues with effecting a change in connection with customer equipment at a customer locus, such as customer premises 16 (Fig. 2), as indicated by a block 62.

Parameters measurable at the measuring locus are measured, as indicated by a block 64. In the preferred embodiment of the method of the present invention, reflected power is measured at central office 12 when the impedance match is altered between telephone circuit 14 under test and associated customer equipment at customer premises 16.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the spirit of the invention which is defined by the following claims:

## Claims

1. A telephone system (10) comprising:
- a central office (12) and customer premises (16) connected to the central office (12) by means of a telephone circuit (14);
- an apparatus (18) for remotely ascertaining at least one selected condition at the customer premises (16) in the telephone circuit (14), the apparatus (18) being disposed remote from the central office (12);
- the apparatus (18) comprising a property altering device (20) connected with said circuit (14);
- the central office (12) comprising a generating device connected with said circuit (14); and
- the central office (12) comprising a measuring device connected with said circuit (14), said property altering device (20) being responsive to a parameter received from said generating device to alter at least one selected property associated with customer telephone equipment installed at said customer premises (16); **characterized in that** the central office (12) has means for imposing a sinusoidal signal on the telephone circuit (14) before measuring the at least one of said at least one selected property, the sinusoidal signal being imposed at frequencies within a range of frequencies higher than those used for conventional voice transmission in order to create reflected signal power, said measuring device measuring the reflected signal power in order to determine at least one of said at least one selected property to effect said ascertaining.

2. Telephone system (10) according to claim 1, **characterized in that** said apparatus (18) is connected substantially at an interface between the telephone circuit (14) and the customer premises (16).

3. Telephone system (10) according to claim 1, **characterized in that** said apparatus (18) is incorporated as part of the installed equipment at the customer premises (16).

4. Telephone system (10) according to one of the claims 1 to 3, **characterized in that** the apparatus (18) is used for measuring the quality of lines (15a, 15b) of the telephone circuit (14) as a function of frequency characteristics.

5. Telephone system (10) according to one of the claims 1 to 3, **characterized in that** the apparatus (18) is used for testing characteristics of the installed equipment at the customer premises (16).

6. Telephone system (10) according to one of the claims 1 to 5, **characterized in that** the property altering device (20) is a make-break device (20) responsive to said parameter to alter impedance match between said circuit (14) and installed equipment connected with said circuit (14) at the customer premises (16).

7. Telephone system (10) according to claim 6, **characterized in that** the make-break device (20) is a relay apparatus.

8. Telephone system (10) according to one of the claims 1 to 7, **characterized in that** said parameter is voltage.

9. Telephone system (10) according to claim 8, **characterized in that** said property altering device (20) is responsive to a differential voltage (V) between the lines (15a, 15b) of the telephone circuit (14) exceeding a predetermined value.

10. Telephone system (10) according to one of the claims 1 to 9, **characterized in that** one of said at least one selected property is impedance.

11. Telephone system (10) according to claim 6, **characterized in that** said measuring device is adapted to measure reflected power from said impedance match to effect said ascertaining.

12. A method for remotely ascertaining at least one selected condition in a telephone circuit (14) up to and including customer premises (16) in said telephone circuit (14); the method comprising the steps of:
(a) altering at least one selected property associated with customer telephone equipment installed at said customer premises (16) by altering a predetermined parameter on said telephone circuit (14) at a central office (12) remote from said customer premises (16);
(b) changing configuration of connection of said telephone circuit (14), said changing being effected in response to said altering the predetermined parameter;
(c) imposing a sinusoidal signal on the telephone circuit (14) at frequencies within a range of frequencies higher than those used for conventional voice transmission, in order to create reflected signal power; and
(d) measuring at said central office (12) the reflected signal power in order to determine at least one of said at least one selected property to effect said ascertaining.

13. Method according to claim 12, **characterized in that** the sinusoidal signal is imposed on the telephone circuit (14) from said central office (12).

## Patentansprüche

1. Fernsprechsystem (10), umfassend:
- eine Vermittlungsstelle (12) und Teilnehmerbereich (16), der mit der Vermittlungsstelle (12) mittels einer Fernsprechleitung (14) verbunden ist;
- eine Vorrichtung (18) zur Fernermittlung mindestens einer ausgewählten Bedingung in dem Teilnehmerbereich (16) in der Fernsprechleitung (14), wobei die Vorrichtung (18) entfernt von der Vermittlungsstelle (12) angeordnet ist;
- die Vorrichtung (18), die eine eigenschaftsändernde Vorrichtung (20) umfaßt, die mit der Leitung (14) verbunden ist;
- die Vermittlungsstelle (12), die eine erzeugende Vorrichtung umfaßt, die mit der Leitung (14) verbunden ist; und
- die Vermittlungsstelle (12), die eine Meßvorrichtung umfaßt, die mit der Leitung (14) verbunden ist, wobei die eigenschaftsändernde Vorrichtung (20) auf einen Parameter reagiert, der von der erzeugenden Vorrichtung empfangen wurde, um mindestens eine ausgewählte Eigenschaft zu ändern, die mit der Teilnehmerfernsprechanlage verbunden ist, die in dem Teilnehmerbereich (16) installiert ist; **dadurch gekennzeichnet, daß** die Vermittlungsstelle (12) Vorrichtungen zum Anwenden eines Sinussignals auf der Fernsprechleitung (14) aufweist, bevor die mindestens eine der mindestens einen ausgewählten Eigenschaft gemessen wird, wobei das Sinussignal bei Frequenzen innerhalb eines Bereiches von Frequenzen angewendet wird, die höher als die sind, die für die herkömmliche Sprachübertragung verwendet werden, um eine reflektierte Signalleistung zu erzeugen, wobei die Meßvorrichtung die reflektierte Signalleistung mißt, um mindestens eine der mindestens einen ausgewählten Eigenschaft zu bestimmen, um die Feststellung zu bewirken.

2. Fernsprechsystem (10) nach Anspruch 1, **dadurch gekennzeichnet, daß** die Vorrichtung (18) im wesentlichen an einer Schnittstelle zwischen der Fernsprechleitung (14) und dem Teilnehmerbereich (16) angeschlossen ist.

3. Fernsprechsystem (10) nach Anspruch 1, **dadurch gekennzeichnet, daß** die Vorrichtung (18) als Teil der installierten Ausrüstungen in dem Teilnehmerbereich (16) enthalten ist.

4. Fernsprechsystem (10) nach einem der Ansprüche 1 bis 3, **dadurch gekennzeichnet, daß** die Vorrichtung (18) zum Messen der Qualität der Leitungen (15a, 15b) der Fernsprechleitung (14) als eine Funktion der Frequenzcharakteristika verwendet wird.

5. Fernsprechsystem (10) nach einem der Ansprüche 1 bis 3, **dadurch gekennzeichnet, daß** die Vorrichtung (18) zum Prüfen der Charakteristika der in dem Teilnehmerbereich (16) installierten Ausrüstungen verwendet wird.

6. Fernsprechsystem (10) nach einem der Ansprüche 1 bis 5, **dadurch gekennzeichnet, daß** die eigenschaftsändernde Vorrichtung (20) eine Umschaltvorrichtung (20) ist, die auf den Parameter reagiert, um die Impedanzabstimmung zwischen der Leitung (14) und den installierten Ausrüstungen zu ändern, die mit der Leitung (14) im Teilnehmerbereich (16) verbunden sind.

7. Fernsprechsystem (10) nach Anspruch 6, **dadurch gekennzeichnet, daß** die Umschaltvorrichtung (20) eine Relaisvorrichtung ist.

8. Fernsprechsystem (10) nach einem der Ansprüche 1 bis 7, **dadurch gekennzeichnet, daß** der Parameter die Spannung ist.

9. Fernsprechsystem (10) nach Anspruch 8, **dadurch gekennzeichnet, daß** die eigenschaftsändernde Vorrichtung (20) auf eine Differenzspannung (V) zwischen den Leitungen (15a, 15b) der Fernsprechleitung (14) reagiert, die einen vorgegebenen Wert übersteigt.

10. Fernsprechsystem (10) nach einem der Ansprüche 1 bis 9, **dadurch gekennzeichnet, daß** eine der mindestens einen ausgewählten Eigenschaft die Impedanz ist.

11. Fernsprechsystem (10) nach Anspruch 6, **dadurch gekennzeichnet, daß** die Meßvorrichtung angepaßt ist, um die reflektierte Leistung von der Impedanzanpassung zu messen, um die Feststellung zu bewirken.

12. Verfahren zur Fernermittlung mindestens einer ausgewählten Bedingung in einer Fernsprechleitung (14) bis zum und einschließlich des Teilnehmerbereiches (16) in der Fernsprechleitung (14); wobei das Verfahren die Schritte umfaßt:
(a) Ändern mindestens einer ausgewählten Eigenschaft, die mit der Teilnehmerfernsprechanlage verbunden ist, die in dem Teilnehmerbereich (16) installiert ist, durch Ändern eines vorgegebenen Parameters auf der Fernsprechleitung (14) in der Vermittlungsstelle (12) entfernt von dem Teilnehmerbereich (16);
(b) Ändern der Konfiguration der Verbindung der Fernsprechleitung (14), wobei die Änderung als Antwort auf das Ändern der vorgegebenen Parameter bewirkt wird;
(c) Anwenden eines Sinussignals auf der Fernsprechleitung (14) bei Frequenzen innerhalb eines Bereiches von Frequenzen, die höher als die sind, die für die herkömmliche Sprachübertragung verwendet werden, um eine reflektierte Signalleistung zu erzeugen; und
(d) Messen in der Vermittlungsstelle (12) der reflektierten Signalleistung, um mindestens eine der mindestens einen ausgewählten Eigenschaft zu bestimmen, um die Feststellung zu bewirken.

13. Verfahren nach Anspruch 12, **dadurch gekennzeichnet, daß** das Sinussignal auf der Fernsprechleitung (14) von der Vermittlungsstelle (12) angewendet wird.

## Revendications

1. Système téléphonique (10) comprenant :
- un central (12) et des locaux d'abonné (16) connectés au central (12) par le biais d'un circuit téléphonique (14) ;
- un appareil (18) pour vérifier à distance au moins une condition sélectionnée au niveau des locaux d'abonné (16) dans le circuit téléphonique (14), l'appareil (18) étant disposé à distance du central (12) ;
- l'appareil (18) comprenant un dispositif de modification de propriété (20) connecté avec ledit circuit (14) ;
- le central (12) comprenant un dispositif de génération connecté avec ledit circuit (14) ; et
- le central (12) comprenant un dispositif de mesure connecté avec ledit circuit (14), ledit dispositif de modification de propriété (20) étant sensible à un paramètre reçu dudit dispositif de génération pour modifier au moins une propriété sélectionnée associée à l'équipement téléphonique d'abonné installé au niveau desdits locaux d'abonné (16) ;
**caractérisé en ce que** le central (12) a des moyens pour imposer un signal sinusoïdal sur le circuit téléphonique (14) avant de mesurer la au moins une de ladite au moins une propriété sélectionnée, le signal sinusoïdal étant imposé à des fréquences dans une plage de fréquences supérieures à celles utilisées pour la transmission vocale traditionnelle afin de créer une puissance du signal réfléchi, ledit dispositif de mesure mesurant la puissance du signal réfléchi afin de déterminer au moins une de ladite au moins une propriété sélectionnée pour effectuer ladite vérification.

2. Système téléphonique (10) selon la revendication 1, **caractérisé en ce que** ledit appareil (18) est connecté sensiblement au niveau d'une interface entre le circuit téléphonique (14) et les locaux d'abonné (16).

3. Système téléphonique (10) selon la revendication 1, **caractérisé en ce que** ledit appareil (18) est incorporé comme partie de l'équipement installé au niveau des locaux d'abonné (16).

4. Système téléphonique (10) selon l'une des revendications 1 à 3, **caractérisé en ce que** l'appareil (18) est utilisé pour mesurer la qualité de lignes (15a, 15b) du circuit téléphonique (14) en fonction des caractéristiques de fréquence.

5. Système téléphonique (10) selon l'une des revendications 1 à 3, **caractérisé en ce que** l'appareil (18) est utilisé pour tester des caractéristiques de l'équipement installé au niveau des locaux d'abonné (16).

6. Système téléphonique (10) selon l'une des revendications 1 à 5, **caractérisé en ce que** le dispositif de modification de propriété (20) est un dispositif de va-et-vient (20) sensible audit paramètre pour modifier l'adaptation d'impédance entre ledit circuit (14) et l'équipement installé connecté avec ledit circuit (14) au niveau des locaux d'abonné (16).

7. Système téléphonique (10) selon la revendication 6, **caractérisé en ce que** le dispositif de va-et-vient (20) est un appareil à relais.

8. Système téléphonique (10) selon l'une des revendications 1 à 7, **caractérisé en ce que** ledit paramètre est la tension.

9. Système téléphonique (10) selon la revendication 8, **caractérisé en ce que** ledit dispositif de modification de propriété (20) est sensible à une tension différentielle (V) entre les lignes (15a, 15b) du circuit téléphonique (14) dépassant une valeur prédéterminée.

10. Système téléphonique (10) selon l'une des revendications 1 à 9, **caractérisé en ce que** une de ladite au moins une propriété sélectionnée est l'impédance.

11. Système téléphonique (10) selon la revendication 6, **caractérisé en ce que** ledit dispositif de mesure est adapté pour mesurer la puissance réfléchie à partir de ladite adaptation d'impédance pour effectuer ladite vérification.

12. Procédé pour vérifier à distance au moins une condition sélectionnée dans un circuit téléphonique (14) jusqu'à et incluant des locaux d'abonné (16) dans ledit circuit téléphonique (14) ; le procédé comprenant les étapes consistant à :
(a) modifier au moins une propriété sélectionnée associée à l'équipement téléphonique d'abonné installé au niveau desdits locaux d'abonné (16) en modifiant un paramètre prédéterminé sur ledit circuit téléphonique (14) au niveau d'un central (12) distant desdits locaux d'abonnés (16) ;
(b) changer la configuration de la connexion dudit circuit téléphonique (14), ledit changement étant effectué en réponse à ladite modification du paramètre prédéterminé ;
(c) imposer un signal sinusoïdal sur le circuit téléphonique (14) à des fréquences dans une plage de fréquences supérieures à celles utilisées pour la transmission vocale traditionnelle, afin de créer une puissance du signal réfléchi ; et
(d) mesurer au niveau dudit central (12) la puissance du signal réfléchi afin de déterminer au moins une de ladite au moins une propriété sélectionnée pour effectuer ladite vérification.

13. Procédé selon la revendication 12, **caractérisé en ce que** le signal sinusoïdal est imposé sur le circuit téléphonique (14) depuis ledit central (12).
